# EUROPÄISCHE PATENTSCHRIFT

(11) **EP 0 446 476 B1**
(45) Veröffentlichungstag und Bekanntmachung des Hinweises auf die Patenterteilung: **29.06.1994**
(21) Anmeldenummer: 90125253.6
(22) Anmeldetag: 21.12.1990
(51) Int. Cl.: F16F 9/05

(54) **Abrollkolben für den Rollbalg einer Rollbalg-Luftfeder**
Piston for unrolling the rolling lobe of a rolling-lobe airspring
Piston de déroulage pour le soufflet roulant d'un ressort pneumatique à soufflet roulant

(30) Priorität: 15.03.1990 DE 4008187
(43) Veröffentlichungstag der Anmeldung: 18.09.1991
(73) Patentinhaber: Continental Aktiengesellschaft, 30165 Hannover (DE)
(72) Erfinder: Schneider, Eckhard, Dr., W-3160 Lehrte (DE); Gawinski, Hubertus, W-3160 Lehrte (DE)

(56) Entgegenhaltungen:
- EP-A- 0 296 445
- EP-A- 0 351 678
- WO-A-79/00411
- GB-A- 15 876
- US-A- 2 988 353

## Beschreibung

Die Erfindung betrifft einen topfförmigen Abrollkolben für eine Rollbalg-Luftfeder, an dessen Mantelwandung sich eine Rollfalte eines Rollbalges der Rollbalg-Luftfeder beim Einfedern abstützt.

Abrollkolben werden in Rollbalg-Luftfedern eingesetzt. Rollbalg-Luftfedern sind in einer Vielzahl von Ausführungsformen bekannt und haben sich z.B. als Fahrzeugfederungen, insbesondere zur Abfederung der Radachsen von Lastkraftwagen und Autobussen, in großem Umfang bewährt. Die Rollbälge sind mindestens an einem Ende an einem Abrollkolben befestigt, der gewöhnlich aus Metall oder Kunststoff gefertigt ist. Im Betriebszustand bewegt sich der Abrollkolben innerhalb des Rollbalges, der sich umstülpt und eine Rollfalte bildet, die über dem Außenmantel des Abrollkolbens abrollt.

Herstellung und Montage des Abrollkolbens bedeuten einen erheblich technischen Aufwand. Der Abrollkolben trägt zu dem Gesamtgewicht der Rollbalg-Luftfeder bei. Bisherige Bemühungen, das Gewicht der Rollbalg-Luftfeder zu reduzieren, führten zur Verwendung leichterer Kolbenwerkstoffe sowie verschiedenen konstruktiven Lösungen.

Beim Einfedern übt die Rollfalte eine große radiale Kraft auf den Abrollkolben aus, was bei zu dünnen Wandstärken zu einem Bruch führen kann. Es ist daher bereits vorgeschlagen worden, die Mantelwandung mit inneren Verstärkungsrippen zu versehen. Der Abrollkolben bezieht dann seine statische und dynamische Festigkeit aus der Kolbenwandstärke, den Verstärkungsrippen und bei einigen Ausführungen aus einem zentralen Stützkörper.

Die Bemühungen der Fachwelt gehen weiter, um die Herstellkosten einer Rollbalg-Luftfeder sowie das Gesamtgewicht durch Auswahl preisgünstiger Werkstoffe zu reduzieren und um die Federungseigenschaften, insbesondere durch Verringerung der ungefederten Massen, zu verbessern.

Aus der DE-AS 11 27 729 ist ein Abrollkolben aus Metall, Gummi oder Kunststoff bekannt, dessen Außenkontur sich zum Fußbereich hin stetig im Durchmesser erweitert. Im Abrollkolben sind horizontale, unabhängig voneinander unter Druck setzbare Kammern vorgesehen. Durch unterschiedliche Druckbeaufschlagung dieser Kammern kann die Wirkfläche der Rollbalg-Luftfeder verschiedenen Einsatzbedingungen angepaßt werden.

Aus der DE-AS 12 85 792 ist ein zylindrischer Abrollkolben bekannt, dessen Innenraum im Fußbereich nach außen abgedichtet ist und über eine Öffnung im horizontalen Kopfbereich mit dem Innenraum des Rollbalges in Druckverbindung steht.

Bei den in der Vergangenheit durchgeführten Versuchen am Abrollkolben hat sich gezeigt, daß die Verwendung leichterer Werkstoffe und/oder geringerer Wandstärken im allgemeinen zu einer Verringerung der mechanischen Festigkeitswerte der Wandung des Abrollkolbens führte, so daß dieser den in der Praxis auftretenden Maximalbelastungen nicht immer gewachsen war. Es traten in dem Bereich des Abrollkolbenmantels, auf den sich der Rollbalg beim Einfedern über seine Rollfalte abstützt, Verformungen und Brüche der Mantelwandung auf.

Es ist bekannt (DE-GM 89 03 264), einen Abrollkolben mit geringerem Gewicht und verminderten Materialkosten durch eine Unterdimensionierung der Abrollkolbenwandung zu schaffen, wobei ein im Innenraum des Abrollkolbens erzeugter Überdruck die Unterdimensionierung kompensiert.

Der Erfindung liegt die Aufgabe zugrunde, einen Abrollkolben mit hoher Festigkeit bei leichtem Gewicht zu schaffen.

Die Aufgabe wird erfindungsgemäß durch die im Anspruch 1 genannten Merkmale gelöst.

Die von der Rollfalte während des Betriebes ausgeübte radial wirkende Belastung auf den Kolbenumfang wird durch die konstruktive Gestaltung der Mantelwandung sicher aufgenommen, da durch die Sicken die Biegewiderstandsmomente der Mantelwandung deutlich gesteigert und damit die Knicksteifigkeit des Abrollkolbens erhöht ist. Es hat sich gezeigt, daß ein mit Sicken in seiner Mantelwandung versehener Abrollkolben eine wesentlich höhere Festigkeit aufweist als die bisher bekannten, mit einer glattflächigen Außenkontur versehenen Abrollkolben,
wobei der Abrollkolben dünnwandig und einteilig ausgebildet werden kann.Die Sicken enden geschlossen im Fußbereich des Abrollkolbens in der Mantelwandung. Dieses erhöht die Umfangssteifigkeit im Fußbereich und die radiale Festigkeit.

Aus der GB-A-15 876/ad 1913 ist ein Abrollkolben für eine bewegliche Membran einer Luftfeder bekannt, der parallele Längswände aufweist, die über abgerundete Wände an den Schmalseiten miteinander verbunden sind. Zur Vergrößerung der Kolbenoberfläche weisen lediglich die Längswände äußere Nuten auf, die den überschüssigen Werkstoff der Membran aufnehmen sollen. Dadurch sollen Faltenbildungen verhindert werden. Eine Stabilitätserhöhung des Abrollkolbens wird nicht angestrebt und nicht erreicht.

Reicht gemäß Anspruch 2 der Auslauf der im Fußbereich endenden Sicken bis auf den maximalen Durchmesser des Abrollkolbens, so werden Schmutzablagerungen minimiert und fertigungstechnische Vorteile erreicht.

Eine weitere vorteilhafte Ausgestaltung der Erfindung wird im Kennzeichen des Anspruchs 3 offenbart. Die durchlaufenden Verstärkungsrippen ermöglichen es, daß in diesen Bereichen die Sicken tiefer ausgebildet sind. Dieses führt zu einer weiteren Materialeinsparung.

Gemäß Anspruch 4 sind im Boden der Verstärkungsrippen Befestigungsbohrungen angeordnet. Der Abrollkolben ist so über seinen Fußbereich in einfacher Weise z. B. an einem federnden Fahrzeugteil befestigbar.

Eine weitere vorteilhafte Ausgestaltung der Erfindung wird im Kennzeichen des Anspruchs 5 offenbart. Die Zug- und Druckbelastungen im Sickengrund werden durch die axial ausgerichteten Fasern aufgenommen.

Ist der Abrollkolben gemäß Anspruch 6 im Fußbereich durch eine Bodenplatte dicht abgeschlossen, kann der Innenraum des Abrollkolbens als Luftzusatzraum der Rollbalg-Luftfeder genutzt werden.

In weiterer vorteilhafter Ausgestaltung der Erfindung wird im Kennzeichen des Anspruchs 7 vorgeschlagen, daß sich die Außenkontur des Abrollkolbens zu seinem Fußbereich hin stetig erweitert. Dadurch wird im Betriebszustand eine sich je nach dem Einfederungsverhalten veränderte wirksame Fläche der Luftfeder einstellen. Es sind aber auch andere Außenkonturen anwendbar, um bestimmte gewünschte Federcharakteristiken zu erzielen.

Durch die Sicken wird die Steifheit des Abrollkolbens erhöht. Mit einer geringen Wandstärke können hohe Belastungen der Rollfalte und alle im dynamischen Betrieb auftretenden Belastungsspitzen von dem erfindungsgemäßen Abrollkolben aufgenommen werden.

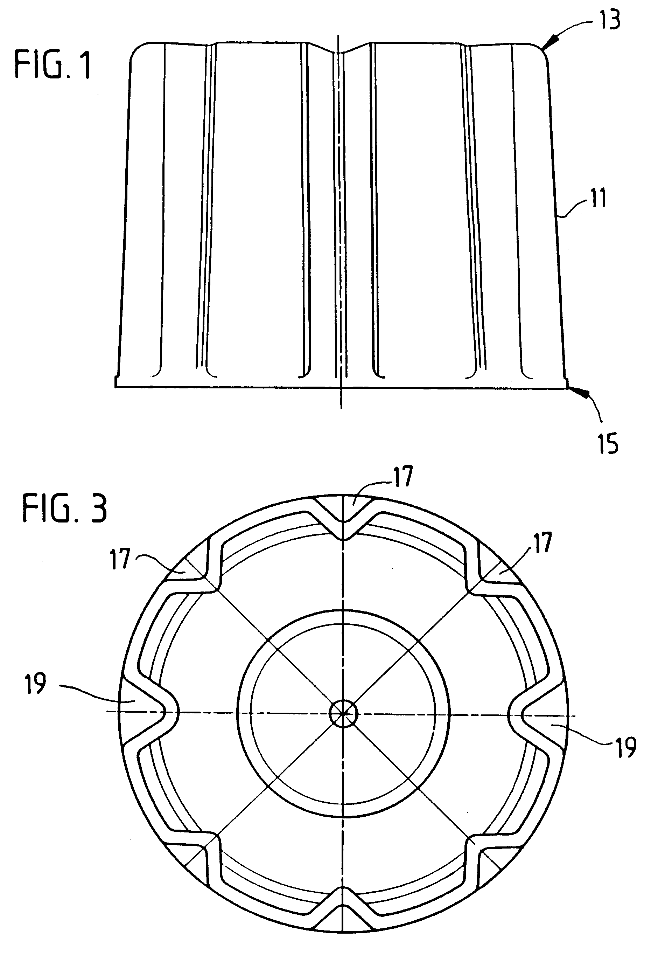

Anhand der Zeichnung wird ein Ausführungsbeispiel der Erfindung nachstehend näher erläutert. Es zeigt
- Fig. 1: eine Seitenansicht eines mit Sicken versehenen Abrollkolbens,
- Fig. 2: eine Untersicht des Abrollkolbens aus Fig. 1,
- Fig. 3: eine Draufsicht des Abrollkolbens,
- Fig. 4: den Abrollkolben im Axialschnitt gemäß Linie IV-IV aus Fig. 2.

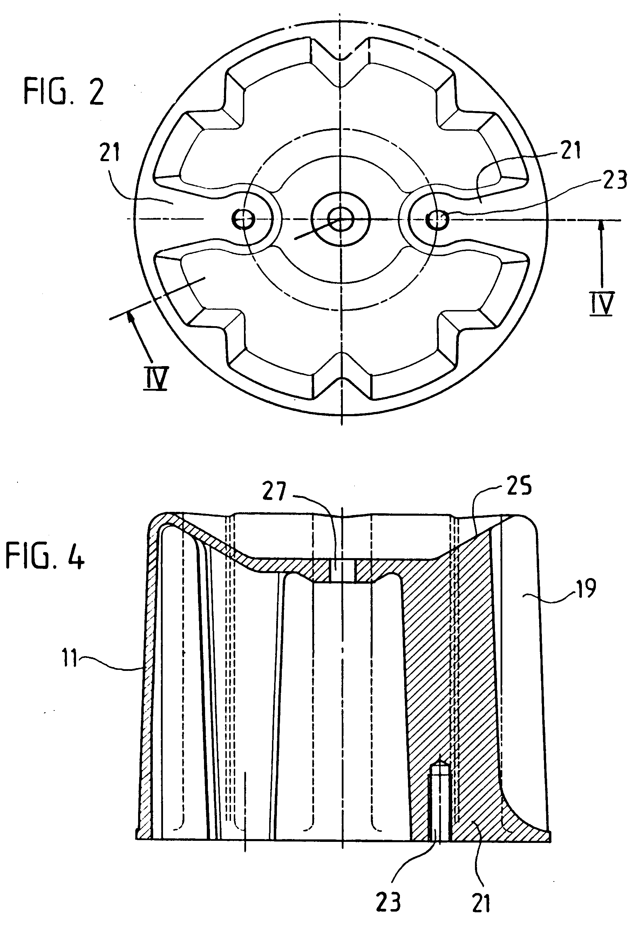

Die Außenkontur des dargestellten Abrollkolbens entspricht einem Kegelstumpf. Die Mantelwandung 11 des Abrollkolbens ist auf der Außenseite mit sich vom Kopfbereich 13 bis zum Fußbereich 15 axial erstreckenden Sicken 17, 19 versehen. Die Sicken 17, 19 liegen über den Umfang verteilt unter einem Winkel von 45^{o} zueinander angeordnet. Zwei einander diametral gegenüberliegende Sicken 19 haben eine größere Tiefe als die übrigen Sicken 17. Im Bereich der tieferen Sicken 19 verlaufen im Inneren des Abrollkolbens zwei von der Mantelwandung radial nach innen springende Verstärkungsrippen 21 (Fig. 2 und Fig. 4) axial vom Kopfbereich 13 zum Fußbereich 15 durch. Im Boden der Verstärkungsrippen 21 sind Befestigungsbohrungen 23 eingebracht, über die der Abrollkolben an einem Fahrzeugteil, z. B. einem Luftfeder-Tragarm, befestigt werden kann.

Die Sicken 17, 19 laufen im Fußbereich 15 geschlossen nach außen bis auf den maximalen Durchmesser des Abrollkolbens aus.

Im Kopfbereich 13 weist der topfförmige Abrollkolben einen sich radial nach innen erstreckenden, muldenförmigen Boden 25 auf, der eine Mittenbohrung 27 zur Aufnahme eines hier nicht dargestellten Befestigungsbolzens, der an dem Boden des Rollbalges anvulkanisiert ist, zur kraftschlüssigen Verbindung der Rollbalg-Luftfeder an dem Abrollkolben dient.

Im eingebauten Zustand des Abrollkolbens bewegt sich die Rollfalte des Rollbalges auf der Mantelwandung 11 des Abrollkolbens auf und ab. Trotz der gering dimensionierten Wandstärke des leichten Abrollkolbens ist ein Einbrechen nicht zu befürchten, da durch die Sicken die Biegewiderstandsmomente der Mantelwandung gesteigert sind. Die Sicken erhöhen außerdem die Knicksteifigkeit des Abrollkolbens. Die große Form- und Knickstabilität wird durch die gesickte,offene Außenkontur des Abrollkolbens erreicht.

## Patentansprüche

1. Topfförmiger Abrollkolben für eine Rollbalg-Luftfeder, an dessen Mantelwandung sich eine Rollfalte eines Rollbalges der Rollbalg-Luftfeder beim Einfedern abstützt, **dadurch gekennzeichnet,** daß die Mantelwandung Sicken aufweist, die im wesentlichen in Längsrichtung des Abrollkolbens verlaufen, wobei die Sicken (17, 19) im Fußbereich (15) des Abrollkolbens in der Mantelwandung (11) geschlossen enden.

2. Abrollkolben nach Anspruch 1, dadurch gekennzeichnet, daß der Auslauf der im Fußbereich (15) endenden Sicken (17, 19) bis auf den maximalen Durchmesser des Abrollkolbens reicht.

3. Abrollkolben nach einem der Ansprüche 1 bis 2, dadurch gekennzeichnet, daß die Mantelwandung (11) mit inneren, durchlaufenden Verstärkungsrippen (21) versehen ist, in deren Bereich die Sicken (19) tiefer ausgebildet sind als die Sicken (17) im übrigen Bereich der Mantelwandung (11).

4. Abrollkolben nach Anspruch 3, dadurch gekennzeichnet, daß im Boden der Verstärkungsrippen (21) Befestigungsbohrungen (23) angeordnet sind.

5. Abrollkolben nach einem der Ansprüche 1 bis 4, dadurch gekennzeichnet, daß der Abrollkolben aus einem faserverstärkten Kunststoff besteht, in dem die Fasern überwiegend in axialer Richtung der Mantelwandung (11) verlaufen.

6. Abrollkolben nach einem der Ansprüche 1 bis 5, dadurch gekennzeichnet, daß der Abrollkolben im Fußbereich (15) durch eine Bodenplatte dicht abgeschlossen ist.

7. Abrollkolben nach einem der Ansprüche 1 bis 6, dadurch gekennzeichnet, daß sich die Außenkontur des Abrollkolbens zum Fußbereich (15) hin stetig erweitert.

## Claims

1. Cup-shaped roller piston for a roller bellows air spring, a roller fold of a roller bellows of the roller bellows air spring being supported on the outer wall of said piston during inward oscillation, characterised in that the outer wall has channels which extend substantially in the longitudinal direction of the roller piston, the channels (17, 19) in the base region (15) of the roller piston terminating with closed ends in the outer wall (11).

2. Roller piston according to claim 1, characterised in that the outlet of the channels (17, 19), which terminate in the base region (15), extends to the maximum diameter of the roller piston.

3. Roller piston according to one of claims 1 to 2, characterised in that the outer wall (11) is provided with internal, continuous reinforcing ribs (21), the channels (19) being deeper in the region of said ribs than the channels (17) in the remaining region of the outer wall (11).

4. Roller piston according to claim 3, characterised in that mounting bores (23) are provided in the base of the reinforcing ribs (21).

5. Roller piston according to one of claims 1 to 4, characterised in that the roller piston is formed from a fibre-reinforced plastics material, in which the fibres mainly extend in the axial direction of the outer wall (11).

6. Roller piston according to one of claims 1 to 5, characterised in that the roller piston is tightly sealed in the base region (15) by a base plate.

7. Roller piston according to one of claims 1 to 6, characterised in that the external configuration of the roller piston constantly widens towards the base region (15).

## Revendications

1. Piston de rebroussement en forme de boisseau, destiné à un ressort pneumatique à soufflet se rebroussant et contre la paroi de l'enveloppe duquel un pli de rebroussement d'un soufflet se rebroussant du ressort pneumatique à soufflet se rebroussant prend appui lors d'une compression, caractérisé en ce que la paroi de l'enveloppe comporte des moulures qui sont orientées essentiellement dans la direction de la longueur du piston de rebroussement, les moulures (17, 19) aboutissant dans la région du pied (15) du piston de rebroussement en étant fermés dans la paroi de l'enveloppe (11).

2. Piston de rebroussement selon la revendication 1, caractérisé en ce que la sortie des moulures (17, 19) aboutissant dans la région du pied (15) atteint le diamètre maximal du piston de rebroussement.

3. Piston de rebroussement selon l'une des revendications 1 et 2, caractérisé en ce que la paroi de l'enveloppe (11) comporte des nervures intérieures continues de raidissement (21) dans la région desquelles les moulures (19) sont plus profondes que les moulures (17) des autres régions de la paroi de l'enveloppe (11).

4. Piston de rebroussement selon la revendication 3, caractérisé en ce que des trous de fixation (23) sont placés dans le fond des nervures de raidissement (21).

5. Piston de rebroussement selon l'une des revendications 1 à 4, caractérisé en ce que le piston de rebroussement est en matière plastique armée de fibres et dans laquelle les fibres sont orientées en majeure partie dans la direction de l'axe de la paroi de l'enveloppe (11).

6. Piston de rebroussement selon l'une des revendications 1 à 5, caractérisé en ce que le piston de rebroussement est fermé de manière étanche dans la région du pied (15) par une plaque de fond.

7. Piston de rebroussement selon l'une des revendications 1 à 6, caractérisé en ce que le contour extérieur du piston de rebroussement s'élargit progressivement vers la région du pied (15).
